# EUROPÄISCHE PATENTANMELDUNG

(11) **EP 2 226 216 A1**
(43) Veröffentlichungstag der Anmeldung: **08.09.2010**
(21) Anmeldenummer: 09154161.5
(22) Anmeldetag: 02.03.2009
(51) Int. Cl.: B60L 11/18, H02J 7/00

(54) **Vorrichtung zur Abstützung einer Ladesteckdose für ein Fahrzeug mit elektrischem Antrieb**

(71) Anmelder: MAGNA STEYR Fahrzeugtechnik AG & Co KG, 8041 Graz (AT)
(72) Erfinder: Unterberger, Rainer c/o Magna Steyr Fahrzeugtec., 8041, Graz (AT)
(74) Vertreter: Harringer, Thomas

(57) **Zusammenfassung**

Die Erfindung betrifft ein Fahrzeug 1 mit einer beweglichen Klappe 4 an der Vorder- oder Rückseite des Fahrzeuges 1 und einem an der Fahrzeugstruktur angeordneten Klappenschloss zur Fixierung und Verriegelung der Klappe in einer geschlossenen Position, wobei das Klappenschloss eine Schlossstütze 16 aufweist, durch welche das Klappenschloss an der Fahrzeugstruktur abgestützt wird, und das Fahrzeug ferner eine Ladeeinrichtung 17 aufweist, wobei die Schlossstütze 16 zur Abstützung der Ladeeinrichtung 17 eingerichtet ist.

## Beschreibung

Die Erfindung betrifft ein Fahrzeug mit einer beweglichen Klappe an der Vorder- oder Rückseite des Fahrzeuges und einem an der Fahrzeugstruktur angeordneten Klappenschloss zur Fixierung und Verriegelung der Klappe in ihrer geschlossenen Position, wobei das Klappenschloss eine Schlossstütze aufweist, durch welche das Klappenschloss an der Fahrzeugstruktur abgestützt wird, und das Fahrzeug ferner eine Ladeeinrichtung zum Aufladen eines elektrischen Energiespeichers aufweist.

Aus dem Stand der Technik sind verschiedene Lösungen zur Anordnung einer Ladesteckdose an einem Elektro- oder Hybridfahrzeug bekannt.

Aus der DE 10 2007 002 025 A1 ist beispielsweise bekannt, eine Ladesteckdose anstelle eines Tankeinfüllstutzens vorzusehen.

Es ist eine der Aufgaben der vorliegenden Erfindung den Stand der Technik zu verbessern und eine besonders kosteneffiziente und technisch vorteilhafte Anordnung der Ladeeinrichtung am Fahrzeug zu verwirklichen.

Diese Aufgabe wird nach Anspruch 1 gelöst.

Dadurch, dass die Schlossstütze zur Abstützung der Ladeeinrichtung eingerichtet wird, ist eine besonders ergonomische Anordnung der Ladeinrichtung möglich. Ferner ergibt sich somit die Möglichkeit eine starre und steife Konsole zur Aufnahme der Ladeeinrichtung am Fahrzeug zu gestalten, ohne zusätzliche verstärkende Schweißungen am Fahrzeugrohbau durchführen zu müssen. Damit ergibt sich ein Gewichts- und Kostenvorteil.

Nach einer besonderen Ausführungsform der erfindungsgemäßen Vorrichtung weist die Ladeeinrichtung eine Konsole auf, die vorzugsweise zumindest teilweise an der Schlossstütze befestigt ist und an der Fahrzeugstruktur abgestützt wird.

Durch die Schlossstütze kann eine technisch einfache und sehr wirkungsvolle steife Abstützung der Ladeeinrichtung verwirklicht werden.

Nach einer besonderen Ausführungsform der erfindungsgemäßen Vorrichtung weist die Ladeeinrichtung eine Ladesteckdose auf, über welche durch Einführen eines externen Ladesteckers der im Fahrzeug vorgesehene elektrische Energiespeicher geladen werden kann.

Nach einer besonderen Ausführungsform der erfindungsgemäßen Vorrichtung weist die Ladesteckdose einen Ladeverriegelungsmechanismus zur Fixierung des Ladesteckers auf, wodurch die Ladestecker bei Ladung in der Ladesteckdose verriegelt werden kann.

Durch den Ladeverriegelungsmechanismus kann verhindert werden, dass während eines Ladevorganges das Laden beispielsweise durch unbeabsichtigtes Trennen der Ladeeinrichtung von deren externem Gegenstück unterbrochen wird.

Nach einer anderen möglichen Ausführungsform der erfindungsgemäßen Vorrichtung weist die Ladeeinrichtung einen Ladestecker auf, der mit einer externen Ladesteckdose verbunden werden kann.

Nach einer besonderen Ausführungsform der erfindungsgemäßen Vorrichtung ist die Schlossstütze in Form eines Stützblechs ausgeführt und das Stützblech an einem Querträger der Fahrzeugstruktur abgestützt wird. Nach verschiedenen Ausführungsformen der Erfindung verlaufen im Bereich des Stützbleches verschiedene Querträger. Durch Befestigung des Stützbleches an einem oder mehreren dieser Querträger ist eine Verbindung des Stützbleches und damit der Ladeeinrichtung mit einer tragenden Struktur des Fahrzeuges möglich.

Nach einer besonderen Ausführungsform der erfindungsgemäßen Vorrichtung weist das Fahrzeug einen Vorder- und einen Hinterwagen auf, und ist die Schlossstütze an einem Teil des Vorderwagens oder des Hinterwagens befestigt.

Nach einer besonderen Ausführungsform der erfindungsgemäßen Vorrichtung ist die bewegliche Klappe als Frontklappe ausgeführt. Durch diese besondere Ausgestaltung ist ein besonders ergonomischer Zugang zur Ladeeinrichtung möglich. Auf einfache Weise kann damit auf öffentlichen und/oder privaten Parkplätzen die Ladeeinrichtung mit einem geeigneten externen Gegenstück zur Aufladung des Energiespeichers des Fahrzeuges verbunden werden. Nach einer weiteren möglichen Ausführungsform der erfindungsgemäßen Vorrichtung, ist die bewegliche Klappe als Heckklappe ausgeführt.

Nach einer besonderen Ausführungsform der erfindungsgemäßen Vorrichtung ist vor der Ladeeinrichtung eine bewegliche Abdeckung vorgesehen. Nach einer besonderen Ausführungsform weist die bewegliche Abdeckung einen Öffnungs- und Verriegelungsmechanismus auf, der ein Öffnen sowie ein, vorzugsweise von der Klappe unabhängiges, Entriegeln und Verriegeln der Abdeckung ermöglicht.

Nach einer besonderen Ausführungsform der erfindungsgemäßen Vorrichtung ist der Öffnungs- und Verriegelungsmechanismus über ein am Fahrzeug angeordnetes und von außerhalb des Fahrzeugs betätigbares Betätigungselement, insbesondere einen beweglichen Logoträger, des Fahrzeuges aktivierbar.

Nach einer besonderen Ausführungsform der erfindungsgemäßen Vorrichtung ist der Öffnungs- und Verriegelungsmechanismus über ein in der Fahrgastzelle angeordnetes Betätigungssystem betätigbar.

Nach einer besonderen Ausführungsform der erfindungsgemäßen Vorrichtung ist die Abdeckung im Bereich des vorderen oder hinteren Stossfängers angeordnet.

Nach einer besonderen Ausführungsform der erfindungsgemäßen Vorrichtung ist die Abdeckung als Teil der Klappe ausgeführt.

Nach einer besonderen Ausführungsform der erfindungsgemäßen Vorrichtung weist das Fahrzeug eine elektrische Antriebseinheit mit zumindest einem E-Motor zum Antrieb zumindest einer Achse und/oder eines Rades des Fahrzeuges auf.

Der Gegenstand der vorliegenden Erfindung ist nachfolgend anhand einer beispielhaften und nicht einschränkenden Ausführung durch mehrere schematische Figuren näher erläutert. Es zeigen:
Fig. 1 eine Ansicht der Fahrzeugstruktur mit Anbauteilen in einer Explosionsansicht
Fig. 2 eine Detailansicht aus Fig. 1 in einer perspektivischen Ansicht
Fig. 3 eine weitere Detailansicht aus Fig.1 mit der erfindungsgemäßen Ladeeinrichtung in einer perspektivischen Ansicht

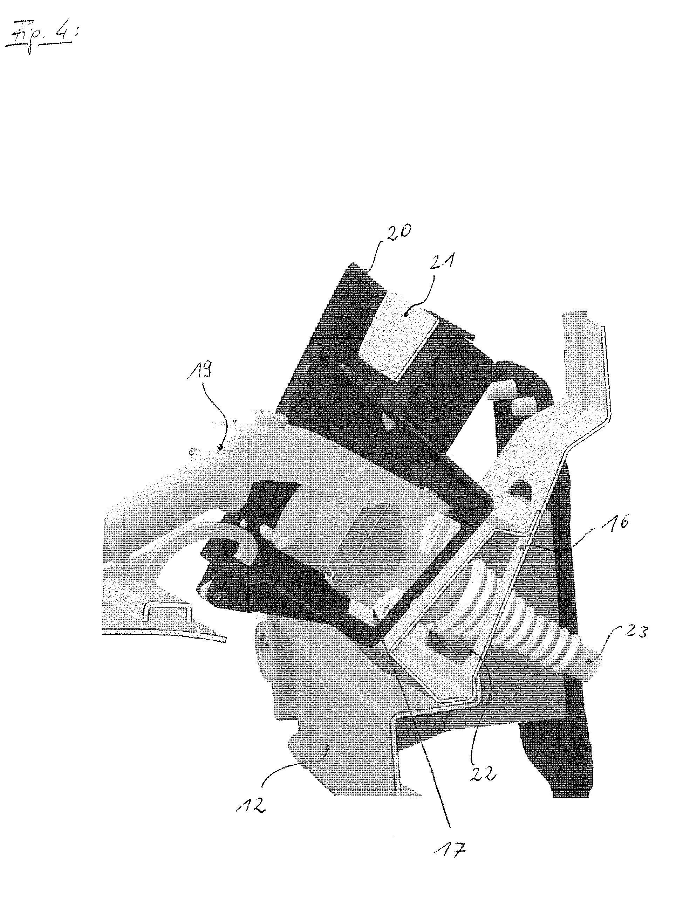

Fig. 4 eine Detailansicht aus Fig. 3, teilweise als Schnitt in perspektivischer Ansicht
Fig. 5 eine weitere Ausführungsform der erfindungsgemäßen Vorrichtung in perspektivischer Ansicht

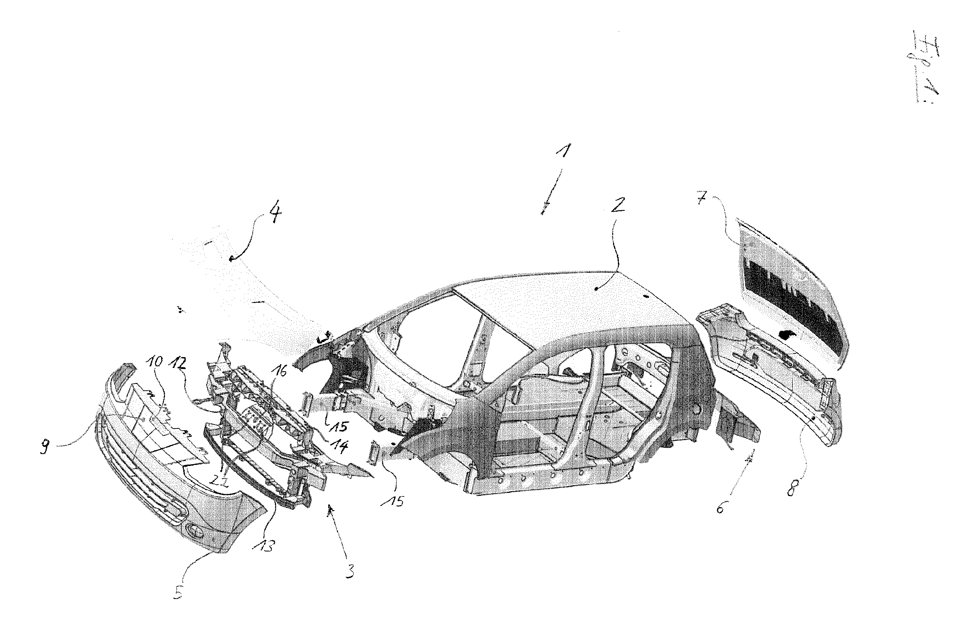

In Fig. 1 ist eine mögliche Ausgestaltung eines erfindungsgemäßen Fahrzeuges dargestellt, wobei der Übersichtlichkeit wegen nur einige ausgewählte und für die Veranschaulichung des Erfindungsgegenstandes wesentliche Teile der Fahrzeugstruktur und einige Anbauteile dargestellt sind. Aus Fig. 1 sind eine Fahrgastzelle 2, ein Vorderwagen 3, eine Frontklappe bzw. Motorhaube 4, ein vorderer Stoßfänger 5, ein Hinterwagen 6, eine Heckklappe 7 und ein hinterer Stoßfänger 8 ersichtlich.

Bei dem dargestellten Fahrzeug handelt es sich um einen 4- oder 5 sitzigen Personenkraftwagen. Die Erfindung eignet sich jedoch darüber hinaus auch für andere Fahrzeuge, insbesondere andere Personen- oder Lastkraftfahrzeuge.

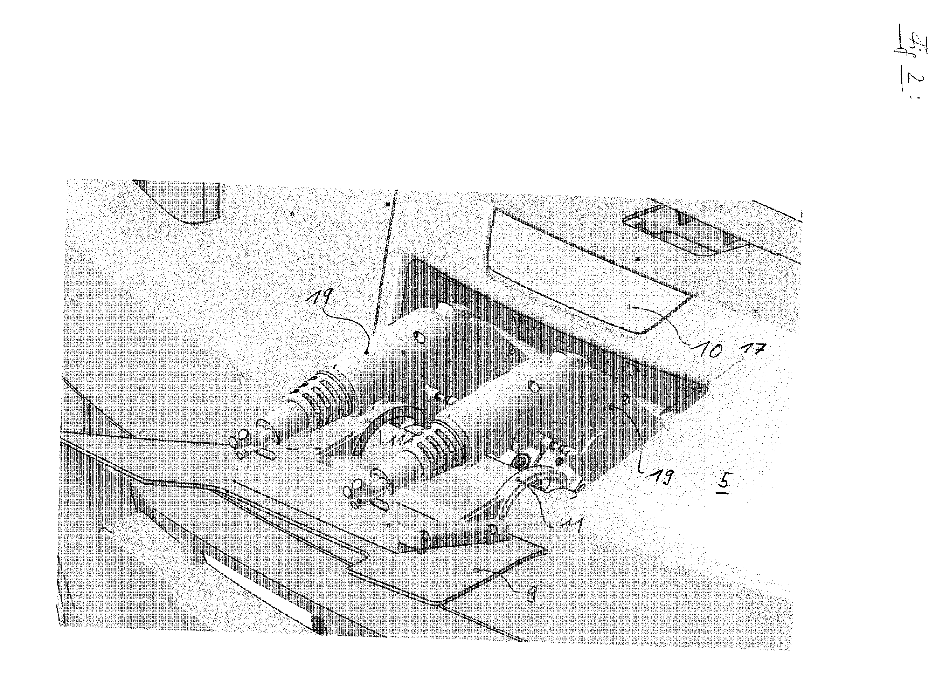

Wie aus Fig. 1 und Fig. 2 ersichtlich weist der vordere Stoßfänger 5 eine bewegliche Abdeckung 9 auf. Diese Abdeckung ist zentral am vorderen Stoßfänger angeordnet und kann durch Betätigung, insbesondere Drücken, eines vorgesehenen Betätigungselementes 10, insbesondere eines vorgesehenen beweglichen Logoträgers, geöffnet und/oder entriegelt werden. Wie in Fig. 2 ersichtlich klappt die bewegliche Abdeckung, beispielsweise durch geeignete Drehscharniere 11 geführt, nach vorne und ermöglicht somit einen Zugang zu den hinter der Abdeckung 9 vorgesehen Bauelementen.

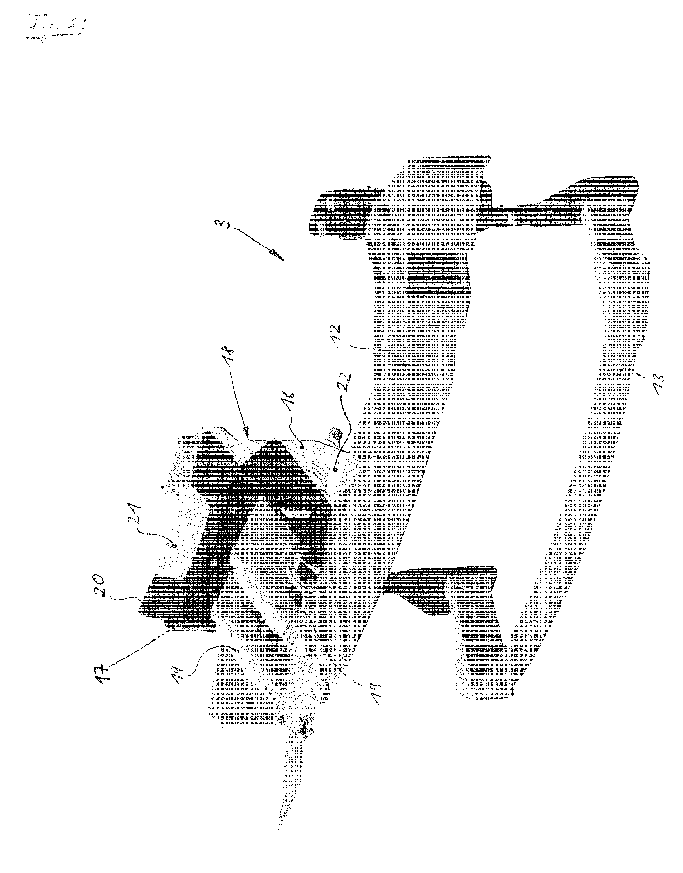

Wie aus Fig. 1 und Fig. 3 ersichtlich weist der Vorderwagen 3 verschiedene Querträger auf, wobei ein erster und ein zweiter Biegeträger 12, 13 insbesondere zur Unterstützung des vorderen Stoßfängers 5 sowie ein Montageträger 14 vorgesehen ist.

Der Vorderwagen 3 ist geeignet, beispielsweise über entsprechende Längsträger 15, an der Fahrgastzelle 2 bzw. deren tragender Struktur befestigt.

An dem ersten Biegeträger 12 ist eine Schlossstütze 16 befestigt. Schlossstützen sind aus dem Stand der Technik, beispielsweise aus der DE 10 2004 014 073 B4 bekannt und dienen zur Abstützung und/oder Befestigung eines Schlosses, insbesondere eines Klappenschlosses, beispielweise eines Frontklappenschlosses, an der Struktur des Fahrzeuges. Die Schlossstütze kann entsprechend verschiedener Ausführungsformen auf unterschiedliche Weise an dem Vorderwagen oder einer anderen Fahrzeugstruktur befestigt werden. In der vorliegenden Ausführungsform ist die Schlossstütze 16 über eine Verschraubung, Vernieten oder ein geeignetes thermisches Verfahren, beispielsweise durch Schweißen, an dem Vorderwagen befestigt und bietet eine entsprechend steife Stützung für eine Ladeeinrichtung 17, die sich über die Schlossstütze 16 an der Fahrzeugstruktur abstützt.

Die Ladeeinrichtung 17 weist im dargestellten Ausführungsbeispiel eine entsprechende Ladesteckdose 18 für zwei Ladestecker 19 auf. Die Ladesteckdose 18 ist in eine Konsole 20 integriert, wobei die Ladesteckdose 18 einen nicht im Detail dargestellten Ladeverriegelungsmechanismus aufweist durch welchen die Ladestecker geeignet fixiert werden können. In Fig. 3 ist ein Entriegelungsschalter 21 dargestellt über welchen im Zusammenwirken mit einem in der Konsole 20 und/oder der Ladesteckdose 18 integrierten Mechanismus die Ladestecker entriegelt und damit von der Ladesteckdose 18 freigegeben werden. Während des Ladevorgangs und aktivierter Verriegelung kann der Ladestecker somit nicht (zerstörungsfrei) aus der Ladesteckdose entnommen werden.

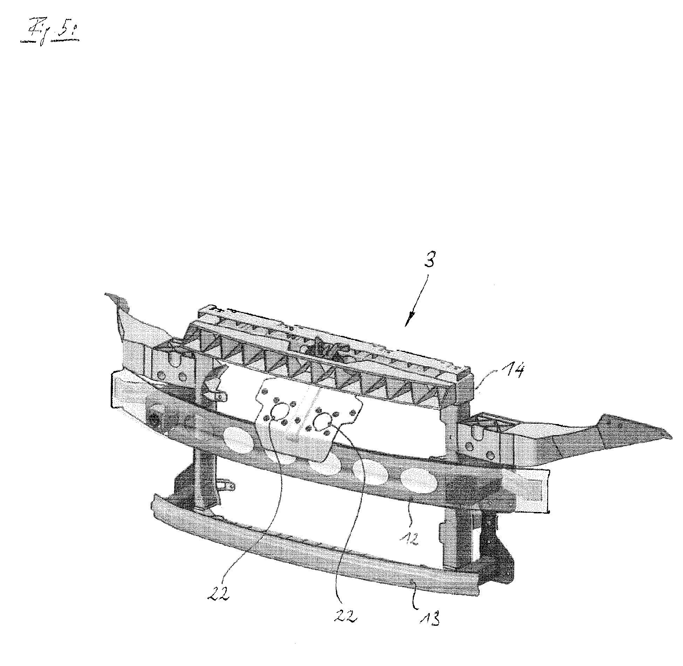

In Fig. 5 ist eine gegenüber den vorhergehenden Figuren leicht abgeänderte Ausgestaltung der Befestigung der Schlossstütze 16 schematisch dargestellt. Die Schlossstütze 16 stützt sich dabei auf den ersten Biegeträger 12 und den Montageträger 14 ab.

Die Schlossstütze 16 weist Öffnungen 22 auf, durch welche geeignete Leitungen 23 geführt werden, welche die Ladeeinrichtung mit einem am Fahrzeug angeordneten elektrischen Energiespeicher (nicht näher dargestellt) verbinden.

Das Fahrzeug 1 ist nach einer besonderen Ausführungsform als Elektro-Fahrzeug oder als Hybrid-Fahrzeug ausgeführt.

In dem dargestellten Ausführungsbeispiel ist die Ladeeinrichtung 17 an der Schlossstütze der Frontklappe 4 angeordnet. Nach einer anderen möglichen Ausführungsform ist die Ladeeinrichtung 17 an der Schlossstütze der Heckklappe angeordnet.

## Patentansprüche

1. Fahrzeug mit einer beweglichen Klappe an der Vorder- oder Rückseite des Fahrzeuges und einem an der Fahrzeugstruktur angeordneten Klappenschloss zur Fixierung und Verriegelung der Klappe in einer geschlossenen Position, wobei das Klappenschloss eine Schlossstütze aufweist, durch welche das Klappenschloss an der Fahrzeugstruktur abgestützt wird, und das Fahrzeug ferner eine Ladeeinrichtung zur Aufladung eines elektrischen Energiespeichers aufweist, wobei die Schlossstütze zur Abstützung der Ladeeinrichtung eingerichtet ist.

2. Fahrzeug nach Anspruch 1, **dadurch gekennzeichnet, dass** die Ladeeinrichtung eine zumindest teilweise an der Schlossstütze befestigte Konsole aufweist, die über die Schlossstütze an der Fahrzeugstruktur abgestützt wird.

3. Fahrzeug nach Anspruch 1 oder 2, **dadurch gekennzeichnet, dass** die Ladeeinrichtung eine Ladesteckdose aufweist, über welche durch Einführen eines externen Ladesteckers der im Fahrzeug vorgesehene elektrische Energiespeicher geladen werden kann.

4. Fahrzeug nach Anspruch 3, **dadurch gekennzeichnet, dass** die Ladesteckdose einen Ladeverriegelungsmechanismus zur Fixierung des Ladesteckers aufweist, wodurch die Ladestecker bei Ladung in der Ladesteckdose verriegelt werden kann.

5. Fahrzeug nach einem der Ansprüche 1 bis 4, **dadurch gekennzeichnet, dass** die Schlossstütze in Form eines Stützblechs ausgeführt ist und das Stützblech an einem Querträger der Fahrzeugstruktur abgestützt wird.

6. Fahrzeug nach einem der Ansprüche 1 bis 5, **dadurch gekennzeichnet, dass** das Fahrzeug einen Vorder- und einen Hinterwagen aufweist, und die Schlossstütze über das Stützblech an einem Teil des Vorderwagens oder des Hinterwagens befestigt ist.

7. Fahrzeug nach einem der Ansprüche 1 bis 6, **dadurch gekennzeichnet, dass** die bewegliche Klappe als Frontklappe oder Heckklappe ausgeführt ist.

8. Fahrzeug nach einem der Ansprüche 1 bis 7, **dadurch gekennzeichnet, dass** vor der Ladeeinrichtung eine bewegliche Abdeckung vorgesehen ist und die bewegliche Abdeckung einen Öffnungs- und Verriegelungsmechanismus aufweist, der ein Öffnen und ein, insbesondere von der Klappe unabhängiges, Entriegeln und Verriegeln der Abdeckung ermöglicht.

9. Fahrzeug nach Anspruch 8, **dadurch gekennzeichnet, dass** der Öffnungs- und Verriegelungsmechanismus über ein am Fahrzeug angeordnetes und von außerhalb des Fahrzeugs betätigbares Betätigungselement aktivierbar ist.

10. Fahrzeug nach Anspruch 8 oder 9, **dadurch gekennzeichnet, dass** der Öffnungs- und Verriegelungsmechanismus über ein in der Fahrgastzelle angeordnetes Betätigungssystem betätigbar ist.

11. Fahrzeug nach einem der Ansprüche 8 bis 10, **dadurch gekennzeichnet, dass** die Abdeckung im Bereich des vorderen oder hinteren Stossfängers angeordnet ist.

12. Fahrzeug nach einem der Ansprüche 8 bis 11, **dadurch gekennzeichnet, dass** die Abdeckung als Teil der Klappe ausgeführt ist.

13. Fahrzeug nach einem der Ansprüche 1 bis 9, **dadurch gekennzeichnet, dass** das Fahrzeug eine elektrische Antriebseinheit mit zumindest einem E-Motor zum Antrieb zumindest einer Achse und/oder eines Rades des Fahrzeuges aufweist.
